Europäisches Patentamt

European Patent Office

Office européen des brevets

(19)

(11) Veröffentlichungsnummer: **0 162 497**
**B1**

(12) EUROPÄISCHE PATENTSCHRIFT

(45) Veröffentlichungstag der Patentschrift: 07.11.90

(21) Anmeldenummer: 85200585.9

(22) Anmeldetag: 16.04.85

(51) Int. Cl.⁵: **G 11 B 15/66,** G 11 B 15/43

(54) Aufzeichnungs- und/oder Wiedergabegerät.

(30) Priorität: 25.04.84 AT 1372/84

(43) Veröffentlichungstag der Anmeldung:
27.11.85 Patentblatt 85/48

(45) Bekanntmachung des Hinweises auf die
Patenterteilung:
07.11.90 Patentblatt 90/45

(84) Benannte Vertragsstaaten:
DE FR GB IT

(56) Entgegenhaltungen:
GB-A-2 087 629
US-A-4 060 840

PATENT ABSTRACTS OF JAPAN, Band 5, Nr.
201 (P.94)873r, 19. Dezember 1981; & JP - A - 56
119 968 (SONY K.K.) 19.09.1981

PATENT ABSTRACTS OF JAPAN, Band 6, Nr.
241 (P-158)1119r, 30. November 1982; & JP - A -
57 141 075 (MATSUSHITA DENKI SANGYO K.K.)
01.09.1982

(73) Patentinhaber: N.V. Philips'
Gloeilampenfabrieken
Groenewoudseweg 1
NL-5621 BA Eindhoven (NL)

(72) Erfinder: Vollmann, Norbert
p/A INT. OCTROOIBUREAU B.V. Prof. Holstlaan
6
NL-5656 AA Eindhoven (NL)
Erfinder: Mader, Leopold
p/A INT. OCTROOIBUREAU B.V. Prof. Holstlaan
6
NL-5656 AA Eindhoven (NL)

(74) Vertreter: Schrijnemaekers, Hubert Joannes
Maria et al
Internationaal Octrooibureau B.V. Prof.
Holstlaan 6
NL-5656 AA Eindhoven (NL)

## Beschreibung

Die Erfindung bezieht sich auf ein Aufzeichnungs- und/oder Wiedergabegerät für ein Magnetband, das in einer in das Gerät einsetzbaren Kassette untergebracht und durch eine Öffnung in der Kassette aus derselben herausführbar ist, mit einer trommelförmigen Abtasteinrichtung für das Magnetband, um deren Mantelfläche das aus der Kassette herausgeführte Magnetband in einem vorgegebenen Winkelbereich herumschlingbar ist, mit einer zum Herausführen des Magnetbenades aus der Kassette und zum Herumschlingen desselben um die Abtasteinrichtung vorgesehenen Bandführungseinrichtung, die mindestens eine zwischen einer Ruhelage und einer Betriebslage mittels einer Verstelleinrichtung verstellbare, an einem Halter angebrachte Bandführung aufweist, in deren Ruhelage sie das in der Kassette untergebrachte Magnetband im Bereich von deren Öffnung hintergreift und in deren Betriebslage das von ihr bei ihrer Verstellung mitgenommene Magnetband um die Abtasteinrichtung herumgeschlungen gehalten ist, mit einer auf einem unter der Kraft einer Feder stehenden, verstellbaren Träger vorgesehenen Positioniereinrichtung zum Positionieren der Bandführung in ihrer Betriebslage und mit einer einen Bandzuggeber aufweisenden Bandzugregeleinrichtung zur Regelung des Bandzuges beim Antreiben des um die Abtasteinrichtung herumgeschlungenen Magnetbandes.

Ein solches Gerät ist beispielsweise aus der US-PS 4 060 840 bekannt. Bei diesem bekannten Gerät weist die Bandzugregeleinrichtung als Bandzuggeber einen Bandzugfühlhebel auf, der beim Verstellen der Bandführung mittels der Verstelleinrichtung von ihrer Ruhelage in ihre Betriebslage unter Mitnahme des Magnetbandes zusätzlich mittels der Verstelleinrichtung aus einer inaktiven Lage in eine aktive Lage, in der ein am Bandzugfühlhebel angebrachter Bandzugfühlstift mit dem von der Bandführung mitgenommenen Magnetband in Wirkverbindung steht, verstellt werden muss, was einen relativ aufwendigen und komplizierten Aufbau bedingt. Das Magnetband umschlingt dabei den Bandzugfühlstift in einem relativ kleinen Winkelbereich, was hinsichtlich einer gewünschten hohen Empfindlichkeit des Bandzuggebers nachteilig ist. Ferner wirkt der Bandzugfühlstift im Bandlauf relativ weit entfernt von der Abtasteinrichtung mit dem Magnetband zusammen und sind zwischen dem Bandzugfühlstift und der Abtasteinrichtung mehrere mit dem Magnetband zusammenwirkende, den Bandzug verändernde Führung- und Abtastelemente vorgesehen, so dass es mit diesem Bandzuggeber nicht möglich ist, den Bandzug des Magnetbandes in unmittelbarer Nähe der Abtasteinrichtung tatsächlich zu detektieren und mit der Bandzugregeleinrichtung den Bandzug des Magnetbandes insbesondere im Bereich der Abtasteinrichtung zu regeln. Für einen einwandfreien Aufzeichnungs- und/oder Wiedergabevorgang mit der hierfür mindestens einen Magnetkopf aufweisenden Abtasteinrichtung ist aber gerade eine Regelung des Bandzuges des Magnetbandes im Bereich der Abtasteinrichtung besonders wichtig. Zur Positionierung der Bandführung in ihrer Betriebslage weist das bekannte Gerät eine auf einem verstellbaren Träger vorgesehene Positioniereinrichtung auf, wobei die Verstellbarkeit des Trägers ausschliesslich für Positionierzwecke ausgenützt wird. Durch diese Verstellbarkeit des Trägers kann sich die an demselben vorgesehene Positioniereinrichtung bei einem Positioniervorgang automatisch lagemässig an eine weitere Positioniereinrichtung zur Positionierung des Halters für die Bandführung anpassen.

Die Erfindung hat sich zur Aufgabe gestellt, bei einem Gerät der eingangs angeführten Gattung die vorstehend angeführten Probleme zu vermeiden und ein Gerät mit einem einfachen Aufbau zu schaffen, bei dem der Bandzug des Magnetbandes auf einfache Weise im Bereich der trommelförmigen Abtasteinrichtung detektiert und geregelt werden kann. Hierzu ist die Erfindung dadurch gekennzeichnet, dass die Verstelleinrichtung für die Bandführung bei in ihrer Betriebslage befindlicher Bandführung von derselben entkoppelbar ausgebildet ist, dass am Träger eine gegenüber demselben zwischen einer Freigabelage und einer Andrucklage verstellbare Andruckeinrichtung zum Andrücken der in ihrer Betriebslage befindlichen Bandführung an die Positioniereinrichtung vorgesehen ist und dass der Träger den Bandzuggeber der Bandzugregeleinrichtung bildet und unter dem vom Magnetband auf die in ihrer Betriebslage befindliche, an die Positioniereinrichtung am Träger angedrückte Bandführung ausgeübten Bandzug entgegen der Kraft der Feder im wesentlichen parallel zu der Längssymmetrieebene des unmittelbar der Abtasteinrichtung benachbarten, frei verlaufenden Magnetbandabschnittes verstellbare angeordnet ist. Auf diese Weise ist erreicht, dass die im Gerät ohnehin bereits zum Herumschlingen des Magnetbandes um die trommelförmige Abtasteinrichtung vorgesehene Bandführung in ihrer Betriebslage, in der sie in der Positioniereinrichtung am Träger mit der Andruckeinrichtung festgehalten ist, zusätzlich zum Detektieren des Bandzuges des Magnetbandes ausgenützt wird, wobei der in der Betriebslage der Bandführung mit derselben fest verbundene Träger den Bandzuggeber der Bandzugregeleinrichtung bildet. Hierdurch erübrigt sich das Vorsehen eines eigenen Bandzuggebers, was eine beträchtliche Vereinfachung und Raumersparnis und eine Erhöhung der Betriebssicherheit des Gerätes zur Folge hat. Die Detektion des Bandzuges über die Bandführung, die in ihrer Betriebslage, um das Magnetband um die Abtasteinrichtung herumgeschlungen zu halten, nahe bei der Abtasteinrichtung liegt, bringt zusätzlich noch den sehr wesentlichen Vorteil mit sich, dass mit derselben der Bandzug in unmittelbarer Nähe der Abtasteinrichtung detektiert wird und entsprechend dem Detektionsergebnis über die Bandzugregeleinrichtung der Bandzug vorteilhafterweise im Bereich der Abtasteinrichtung geregelt wird, was für einen einwandfreien Aufzeichnungs- und/oder Wiedergabevorgang sehr wesentlich ist. Ein weiterer Vorteil besteht darin, dass die Bandführung in ihrer Betriebslage in einem relativ grossen Winkelbereich von dem Magnetband umschlungen ist, was im Hinblick auf eine hohe Empfindlichkeit des Bandzuggebers vorteilhaft ist. Durch die Entkopplung der Bandführung in ihrer Betriebslage von der Verstelleinrichtung kann die Bandführung allen Bandzugänderungen ohne Behinderung folgen, so dass auch kleine Bandzugschwankungen mit diesem Bandzuggeber sicher detektiert werden. Dadurch, dass der Träger im wesentlichen parallel zu der Längssymmetrieebene des unmittelbar der Abtasteinrichtung benachbarten, frei verlaufenden Magnetbandabschnittes verstellbar angeordnet ist, ist auf einfache Weise erreicht, dass der Verlauf des Magnetbandes in seinem Niveau relativ zur Abtasteinrichtung während des Bandzugregelvorganges unverändert bleibt. Zu erwähnen ist noch, dass der Bandzuggeber auf verschiedenen Prinzipien beruhen kann, beispielsweise kann er als photoelektrischer, magnetoelektrischer oder mechanischer Geber ausgebildet sein.

Die Verstelleinrichtung für die Bandführung kann beispielsweise durch eine Hebelanordnung gebildet sei sein, wobei die Verbindung dieser Hebelanordnung mit dem Halter der Bandführung bei in ihrer Betriebslage befindlicher Bandführung mit einer separaten Betätigungseinrichtung gelöst wird. Als vorteilhaft hat sich erwiesen, wenn die Verstelleinrichtung für die Bandführung einen auf einer Geräteplatte um die Abtasteinrichtung verdrehbaren, antreibbaren Ring zum Verstellen des Halters für die Bandführung und eine zum Ring koaxiale Führung zum Führen des Halters bei seiner Verstellung aufweist, der Ring mit einem Durchbruch zur Geräteplatte hin versehen und mit dem Halter eine Schubstange gelenkig verbunden ist, deren abgewinkeltes freies Ende beim Verdrehen des Ringes zum Verstellen der Bandführung in ihre Betriebslage im Durchbruch am Ring anliegt und sich an der Geräteplatte gleitend abstützt und beim Verdrehen des Ringes zum Verstellen der Bandführung aus ihrer Betriebslage von der Geräteplatte abgehoben ist und an einem Anschlag am Ring anliegt, und die Geräteplatte einen bei in ihrer Betriebslage befindlicher Bandführung sich mit dem Durchbruch im Ring zumindest teilweise überdeckenden weiteren Durchbruch aufweist, wobei zur Entkopplung der Verstelleinrichtung von der in ihrer Betriebslage befindlichen, an die Positioniereinrichtung am Träger angedrückten Bandführung der Halter von der Führung gelöst wird und die Schubstange in die beiden Durchbrüche frei beweglich eintritt und zum Koppeln der Verstelleinrichtung mit der Bandführung beim Verstellen derselben aus ihrer Betriebslage die Schubstange vom Ring mit ihrem abgewinkelten freien Ende am Anschlag zur Anlage gebracht und der Halter mit der Führung verbunden wird. Hierdruch wird eine stabile, reibungsarme und betriebssichere Verstelleinrichtung erhalten, bei der eine einfache und sichere Entkopplung derselben von der Bandführung und auch ein einfaches Koppeln derselben mit der Bandführung ohne separate Hilfsmittel erreicht ist.

Die Andruckeinrichtung kann beispielsweise durch einen von der Verstelleinrichtung steuerbaren, in seiner Andrucklage verriegelbaren Schiebermechanismus gebildet sein. Als vorteilhaft hat sich erwiesen, wenn die Andruckeinrichtung durch eine beim Verstellen der Bandführung in ihre Betriebslage automatisch in ihre Andrucklage und beim Verstellen der Bandführung aus ihrer Betriebslage automatisch in ihre Freigabelage steuerbare Totpunkt-Hebelanordnung gebildet ist. Eine solche Totpunkt-Hebelanordnung weist vorteilhafterweise einen einfachen Aufbau auf und ist durch ihr selbsttätiges Umkippen auf einfache Weise steuerbar.

Im Verlauf des Magnetbandes zwischen der Abtasteinrichtung und der Bandführung kann ein mit dem Magnetband zusammenwirkendes, feststehend angeordnetes Bandumlenkelement vorgesehen sein, welches dafür Sorge trägt, dass das Magnetband unabhängig von der Verstellbewegung des Trägers und der in ihrer Betriebslage an demselben festgehaltenen Bandführung während des Bandzugregelvorganges stets im gleichen vorgegenenen Winkelbereich um die Abtasteinrichtung herumgeschlungen gehalten ist. Als vorteilhaft hat sich erwiesen, wenn der unmittelbar der Abtasteinrichtung benachbarte, frei verlaufende Magnetbandabschnitt sich bis zu der in ihrer Betriebslage befindlichen, an die Positioniereinrichtung am Träger angedrückten Bandführung erstreckt und der Träger durch einen in Längsrichtung dieses frei verlaufenden Magnetbandabschnittes verstellbar angeordneten Schieber gebildet ist. Hierdurch ist ohne separate Hilfsmittel erreicht, dass das Magnetband auch während des Bandzugregelvorganges stets im gleichen vorgegebenen Winkelbereich um die Abtasteinrichtung herumgeschlungen bleibt.

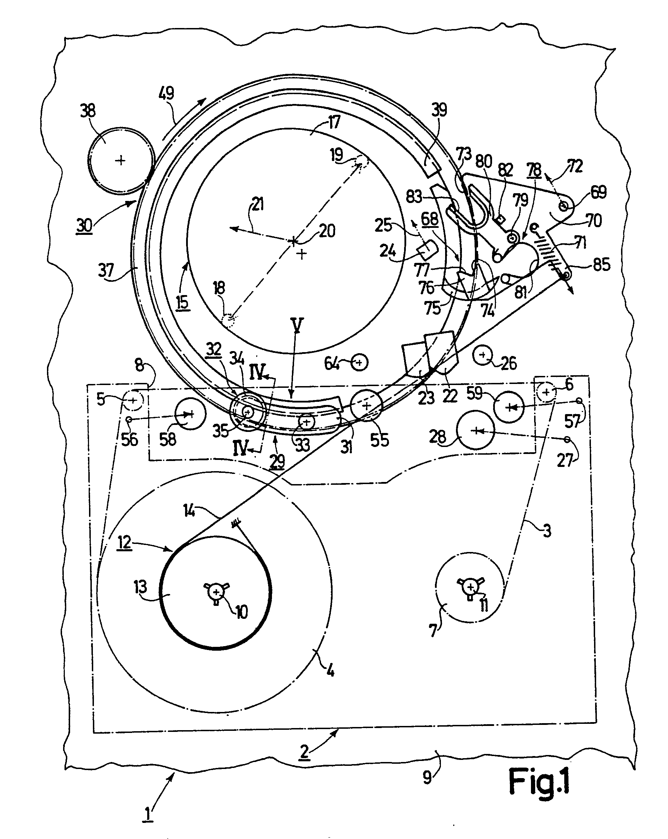

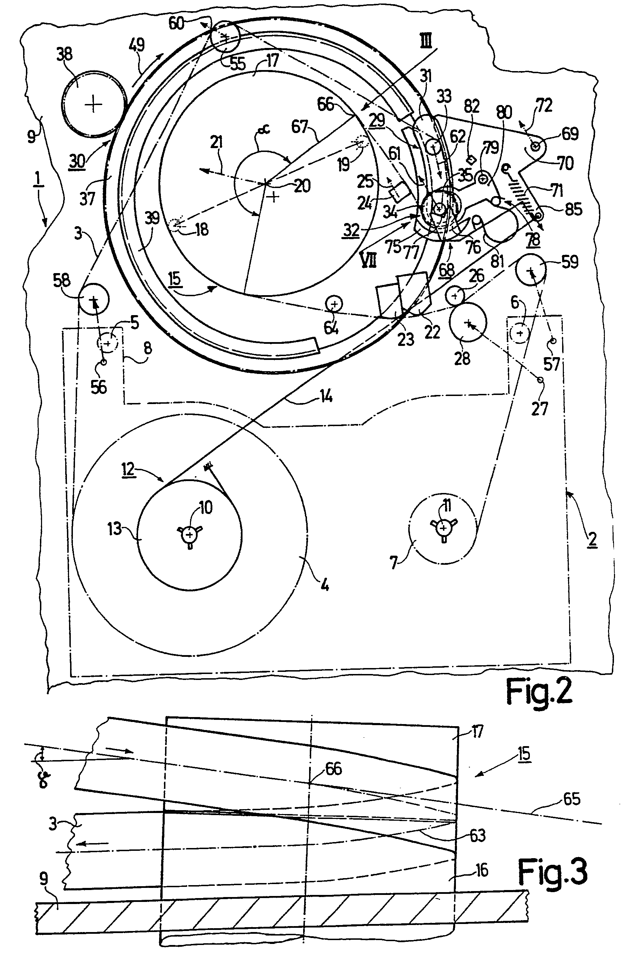

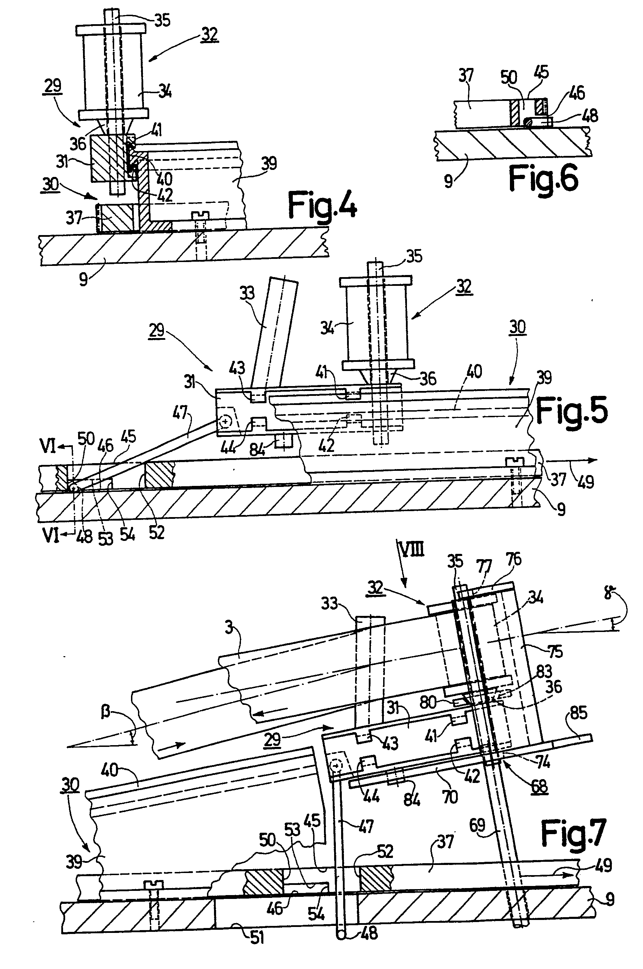

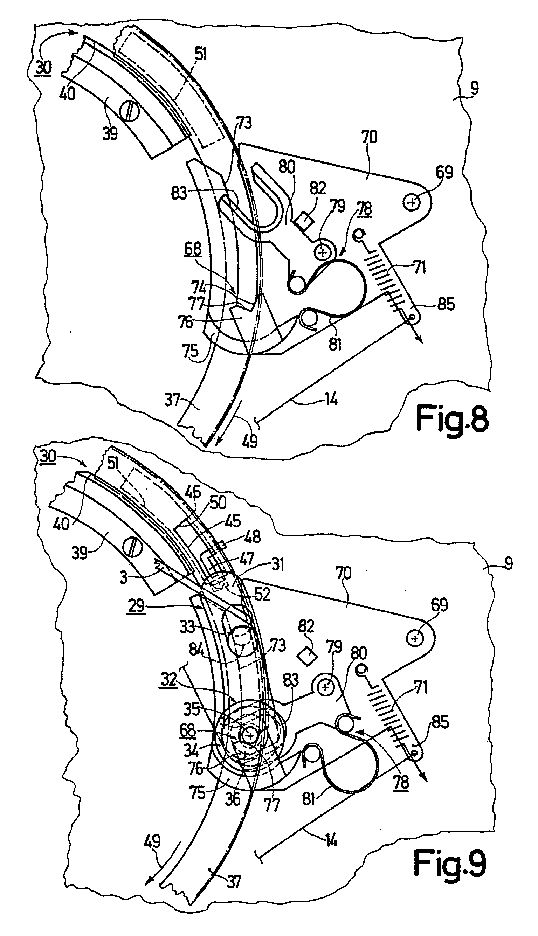

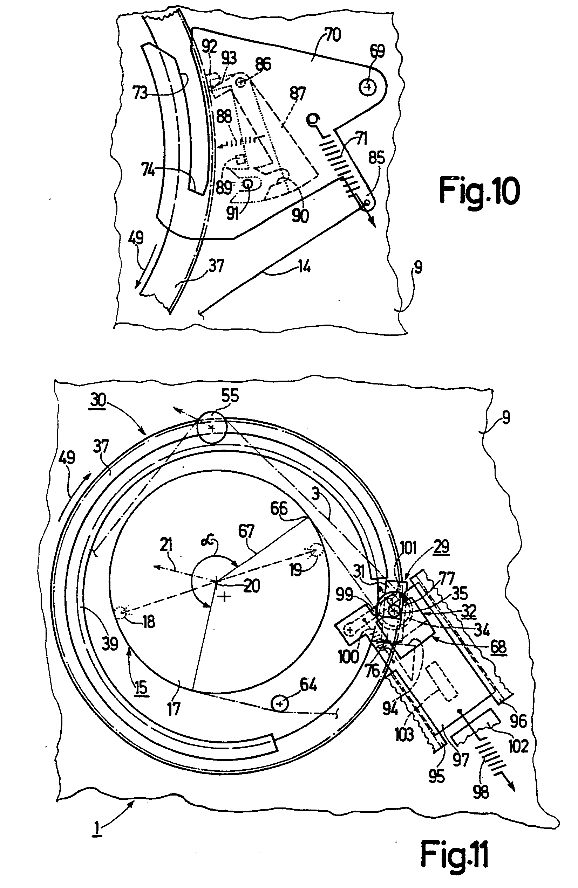

Die Erfindung wird im folgenden anhand von zwei in den Zeichnungen dargestellten Ausführungsbeispielen, auf die sie jedoch nicht beschränkt sein soll, näher beschrieben. Die Fig. 1 zeigt schematisch in Draufsicht die erfindungswesentlichen Teile eines Magnetband-Aufzeichnungs- und/oder Wiedergabegerätes für Fernsehsignale gemäss einem ersten Ausführungsbeispiel, bei dem eine Positioniereinrichtung für die Bandführungen einer Bandführungseinrichtung auf einer einen mechnaischen Bandzuggeber bildenden schwenkbaren Trägerplatte vorgesehen ist, wobei die Bandführungen ihre Ruhelage einnehmen. Die Fig. 2 zeigt analog wie die Fig. 1 dasselbe Gerät, wobei die Bandführungen ihre Betriebslage einnehmen, in der sie mit der Positioniereinrichtung positioniert sind. Die Fig. 3 zeigt schematisch in grösserem Massstab als die Fig. 2 in Seitenansicht gemäss dem Pfeil III in Fig. 2 eine trommelförmige Abtasteinrichtung des Gerätes gemäss den Fig. 1 und 2 mit um dieselbe herumgeschlungenem Magnetband. Die Fig. 4 zeigt in grösserem Massstab als die Fig. 1 im Schnitt gemäss der Linie IV-IV in Fig. 1 die Bandführungseinrichtung dieses Gerätes, wobei sich deren Bandführungen in ihrer Ruhelage befinden. Die Fig. 5 zeigt in grösserem Massstab als die Fig. 1 in Seitenansicht gemäss dem Pfeil V in Fig. 1 die Bandführungseinrichtung, wobei sich deren Bandführungen in ihrer Ruhelage befinden. Die Fig. 6 zeigt im Schnitt gemäss der Linie VI-VI in Fig. 5 ein Detail einer Verstelleinrichtung dieses Gerätes für die Bandführungen. Die Fig. 7 zeigt in grösserem Massstab als die Fig. 2 in Seitenansicht gemäss dem Pfeil VII in Fig. 2 die Bandführungseinrichtung, wobei sich deren Bandführungen in ihrer Betriebslage befinden und mit der Positioniereinrichtung positioniert sind. Die Fig. 8 zeigt in Draufsicht gemäss den Pfeil VIII in Fig. 7 die auf der Trägerplatte vorgesehene Positioniereinrichtung für die Bandführungen, wobei dieselben ihre Betriebslage aber nicht einnehmen. Die Fig. 9 zeigt analog wie die Fig. 8 in Draufsicht die auf der Trägerplatte vorgesehene Positioniereinrichtung für die Bandführungen, wobei dieselben ihre Betriebslage einnehmen. Die Fig. 10 zeigt analog wie die Fig. 8 und 9 in Draufsicht die nur schematisch mit ihren Umrissen dargestellte Trägerplatte für die Positioniereinrichtung und eine steuerbare Verriegelungseinrichtung für die Trägerplatte. Die Fig. 11 zeigt schematisch in Draufsicht die erfindunswesentlichen Teile eines Magnetband-Aufzeichnungs- und/oder Wiedergabegerätes für Fernsehsignale gemäss einem zweiten Ausführungsbeispiel, bei dem die Positioniereinrichtung für eine Bandführung einer Bandführungseinrichtung auf einem einen elektromagnetischen Bandzuggeber bildenden Schieber vorgesehen ist.

In das in den Fig. 1 und 2 dargestellte Gerät 1 ist eine schematisch mit strichpunktierten Linien angedeutete Kassette 2 einsetzbar, in der ein Magnetband 3 untergebracht ist, das innerhalb der Kassette von einem ersten Bandwinkel 4 über eine erste Umlenkrolle 5 und eine zweite Umlenkrolle 6 zu einem zweiten Bandwickel 7 geführt ist, wobei der sich zwischen den beiden Umlenkrollen 5 und 6 erstreckende Magnetbandabschnitt im Bereich einer Öffnung 8 der Kassette 2 verläuft, durch die das Magnetband 3 aus der Kassette herausführbar ist.

Zum Antreiben der beiden Bandwickel 4 und 7 weist das Gerät 1 zwei auf einer Geräteplatte 9 drehbar gelagerte, auf nicht näher dargestellte Weise motorisch antreibbare Wickeldorne 10 und 11 auf. Mit dem Wickeldorn 10 wirkt eine Bandzugregeleinrichtung 12 zusammen, die eine zu dem Wickeldorn 10 koaxiale, mit demselben drehfest verbundene Bremsscheibe 13 und ein mit deren Stirnfläche zusammenwirkendes Bremsband 14 aufweist. Je stärker das Bremsband 14 gegen die Stirnfläche der Bremsscheibe 13 drückt, um so mehr wird das vom Bandwickel 4 ablaufende Magnetband gebremst, wodurch der Bandzug des Magnetbandes steigt. Bei einer Verringerung der Bremswirkung des Bremsbandes 14 auf die Bremsscheibe 13 wird der Bandzug des Magnetbandes verringert.

Das Gerät 1 weist eine trommelförmige Abtasteinrichtung 15 auf, die aus einer an der Geräteplatte 9 feststehend angebrachten, stillstehenden Trommelhälfte 16 und einer zu dieser koaxialen, rotierend antreibbaren Trommelhälfte 17 besteht, an der zwei diametral zueinander liegende, durch den zwischen den beiden Trommelhälften gebildeten Spalt hindurchragende Magnetköpfe 18 und 19 angebracht sind. Die Magnetköpfe 18 und 19 dienen zum Aufzeichnen bzw. Wiedergeben von Fernsehsignalen in bzw. von sogenannten Schrägspuren auf dem Magnetband, das hierfür in einem vorgegebenen Winkelbereich α um die Mantelfläche der Abtasteinrichtung 15 in einer schraubenlinienförmigen Bahn herumschlingbar ist. Die Achse 20 der Abtasteinrichtung 15 ist hierbei in Richtung des Pfeiles 21 gegenüber der Geräteplatte 9 geneigt, wodurch in bekannter Weise der schraubenlinienförmige Verlauf der Magnetbandes um die Abtasteinrichtung erreicht wird. Zum Aufzeichnen bzw. Wiedergeben von zu den Fernsehsignalen gehörigen Tonsignalen weist das Gerät 1 einen stillstehend angeordneten Aufnahme/Wiedergabe-Magnetkopf 22 und zum Löschen von Tonsignalen einen stillstehend angeordneten Lösch-Magnetkopf 23 auf. Die Arbeitsspalte dieser beiden Magnetköpfe 22 und 23 verlaufen hierbei senkrecht zur Geräteplatte 9. Zum gleichzeitigen Löschen aller auf dem Magnetband aufgezeichneten Signale weist das Gerät einen weiteren stillstehend angeordneten Lösch-Magnetkopf 24 auf, dessen Arbeitsspalt in Anpassung an den Verlauf des ünmittelbar der Abtasteinrichtung 15 benachbarten. frei zum Magnetkopf 24 verlaufenden Magnetbandabschnittes in Richtung des Pfeiles 25 gegenüber der Geräteplatte 9 geneigt ist. Beim Herumschlingen des aus der Kassette 2 herausgeführten Magnetbandes 3 um die trommelförmige Abtasteinrichtung 15 wird das Magnetband auch mit den Magnetköpfen 22, 23 und 24 in Abtastverbindung gebracht. Zum Antreiben des aus der Kassette 2 herausgeführten Magnetbandes 3 mit konstanter vorgegebener Fortbewegungsgeschwindigkeit weist das Gerät 1 eine motorisch antreibbare, senkrecht zur Geräteplatte 9 ausgerichtete Antriebswelle 26 auf, an die das Magnetband mit einer auf nicht näher dargestellte Weise verstellbaren, um einen Lagerpunkt 27 verschwenkbaren Andruckrolle 28 andrückbar ist.

Das Gerät 1 ist zum Herausführen des Magnetbandes 3 aus der Kassette 2 und zum Herumschlingen desselben um die Abtasteinrichtung 15 mit einer Bandführungseinrichtung 29 versehen. Die Bandführungseinrichtung weist zwei zwischen einer in Fig. 1 dargestellten Ruhelage und einer in Fig. 2 dargestellten Betriebslage mittels einer Verstelleinrichtung 30 verstellbare, an einem blockförmigen Halter 31 angebrachte Bandführungen 32 und 33 auf. Wie aus den Fig. 4, 5 und 7 im Detail ersichtlich ist, besteht die Bandführung 32 aus einer mit Flanschen versehenen Rolle 34, die um eine den Halter 31 durchsetzende Welle 35 drehbar ist, wobei zwischen der Rolle 34 und dem Halter 31 ein kegelstumpfförmiges Zwischenstück 36 auf die Welle 35 aufgesetzt ist. Die Bandführung 33 ist als in den Halter 31 eingesetzter Stifte ausgebildet, der gegenüber der Bandführung 32 geneigt angeordnet ist.

Die Verstelleinrichtung 30 für die Bandführungen 32 und 33 weist einen auf der Geräteplatte 9 um die Abtasteinrichtung 15 auf nicht näher dargestellte Weise verdrehbar gelagerten, antreibbaren Ring 37 zum Verstellen des Halters 31 für die beiden Bandführungen 32 und 33 auf. Zum Antreiben des Ringes 37 ist derselbe an seiner äusseren Stirnseite mit einer Verzahnung versehen, mit der ein von einem nicht dargestellten Motor antreibbares Antriebszahnrad 38 in Eingriff steht, welcher Motor, jeweils nachdem die Bandführungen ihre Ruhelage bzw. ihre Betriebslage erreicht haben, automatisch abgeschaltet wird, wie dies an sich beispielsweise aus der AT-PS 373.429 für eine andere Verstelleinrichtung zum Verstellen von Bandführungen bekannt ist. Die Verstelleinrichtung 30 weist ferner eine zum Ring 37 koaxiale, kreisbogenförmige Führung 39 zum Führen des Halters 31 bei seiner Verstellung auf. Die Führung 39 verläuft im Bereich ihres näher bei der Kassette liegenden Endes parallel zur Geräteplatte 9, wie dies aus den Fig. 4 und 5 ersichtlich ist, und weist gegen ihr anderes Ende hin einen von der Geräteplatte 9 weg ansteigenden Verlauf auf, wie dies aus Fig. 7 ersichtlich ist. Die Führung 39 ist mit einer schwalbenschwanzförmigen Führungsleiste 40 versehen, auf die der Halter 31 verschiebbar aufgesetzt ist, wobei vier am Halter vorgesehene Führungsnasen 41, 42, 43 und 44 die Führungsleiste 40 übergreifen und auf diese Weise den Halter 31 an derselben verschiebbar halten, wie dies aus den Fig. 4, 5 und 7 ersichtlich ist.

Der Ring 37 ist mit einem Durchbruch 45 zur Geräteplatte 9 hin versehen, von dem aus ein weiterer Durchbruch 46 zu der äusseren Stirnseite des Ringes führt, der aber auch zur Geräteplatte 9 hin offen ist. In den Durchbruch 45 ragt eine mit dem Halter 31 über ein Kugelgelenk gelenkig verbundene Schubstange 47 mit ihrem abgewinkelten freien Ende 48, das durch den weiteren Durchbruch 46 hindurchgeführt ist. Beim Verdrehen des Ringes 37 in Richtung des Pfeiles 49 zum Verstellen der am Halter 31 angebrachten Bandführungen 32 und 33 in ihre Betriebslage liegt das abgewinkelte freie Ende 48 der Schubstange 47 an der Begrenzungswand 50 der Durchbrüche 45 und 46 am Ring 37 an und stützt sich das freie Ende 48 an der Geräteplatte 9 gleitend ab, wobei der angetriebene Ring 37 über die Schubstange 47 die am Halter 31 angebrachten Bandführungen 32 und 33 in ihre Betriebslage verschiebt.

Die Verstelleinrichtung 30 für die Bandführungen 32 und 33 ist bei in ihrer Betriebslage befindlichen Bandführungen von denselben entkoppelbar ausgebildet, wie aus Fig. 7 ersichtlich ist. Zur Entkopplung der Verstelleinrichtung von den Bandführungen wird erstens der Halter 31 für die Bandführungen von der Führung 39 gelöst. Dies wird dadurch erreicht, dass der Halter 31 von der Führungsleiste 40 heruntergeschoben wird, wobei er dann an einer Positioniereinrichtung für die Bandführungen festgehalten wird, was nachfolgend noch detailliert beschrieben ist. Zweitens wird zur Entkopplung der Verstelleinrichtung von den Bandführungen die Antriebsverbindung zwischen dem Ring 37 und der Schubstange 47 gelöst. Hierfür weist die Geräteplatte 9 einen bei in ihrer Betriebslage befindlichen Bandführungen sich mit dem Durchbruch 45 im Ring 37 teilweise überdeckenden weiteren Durchbruch 51 auf, in den das beim Verstellen der Bandführungen in ihre Betriebslage in Richtung des Pfeiles 49 an der Geräteplatte 9 gleitend abgestützte freie Ende 48 der Schubstange 47 kurz bevor die Bandführungen ihre Betriebslage erreichen selbsttätig eintritt. Bei in ihrer Betriebslage befindlichen Bandführungen durchsetzt dann die Schubstange 47 die beiden Durchbrüche 45 und 51 in ihrem sich überdeckenden Bereich frei beweglich, so dass die Schubstange 47 keine Verbindung mehr zum Ring 37 und zur Geräteplatte 9 hat. Auf diese Weise ist ohne separate Mittel eine selbsttätige Entkopplung der Verstelleinrichtung 30 von den Bandführungen 32 und 33 erreicht.

Beim Verdrehen des Ringes 37 entgegen der Richtung des Pfeiles 49, um die Bandführungen 32 und 33 aus ihrer Betriebslage zu verstellen, stösst die Begrenzungswand 52 des Durchbruches 45 gegen die Schubstange 47, wodurch diese aus dem weiteren Durchbruch 51 in der Geräteplatte 9 herausgeschwenkt und das abgewinkelte freie Ende 48 der Schubstange 47 in den weiteren Durchbruch 46 im Ring 37 hineingeschwenkt wird. Beim weiteren Verdrehen des Ringes 37 liegt das abgewinkelte freie Ende 48 an den einen Anschlag für dasselbe bildenden Begrenzungswänden 53 und 54 des weiteren Durchbruches 46 an, wobei der Ring 37 den Halter 31 von der Positioniereinrichtung löst, wie nachfolgend noch beschrieben ist, und wieder auf die Führungsleiste 40 hinaufschiebt. Auf diese Weise ist ohne separate Mittel auch ein selbsttätiges Koppeln der Verstelleinrichtung 30 mit den Bandführungen 32 und 33 erreicht, wonach der Ring 37 über die Schubstange 47 die am Halter 31 angebrachten Bandführungen 32 und 33 aus ihrer Betriebslage entlang der Führung 39 in ihre Ruhelage ziehen kann.

In der in Fig. 1 dargestellten Ruhelage der Bandführungen 32 und 33 hintergreifen sie das in der Kassette 2 untergebrachte Magnetband 3. Durch Antreiben des Ringes 37 in Richtung des Pfeiles 49 wird über die Schubstange 47 der Halter 31 entlang der Führungsleiste 40 der Führung 39 verschoben, wobei die Bandführungen 32 und 33 in ihre Betriebslage verstellt werden, in der das von den Bandführungen bei ihrer Verstellung mitgenommene Magnetband um die Abtasteinrichtung 15 herumgeschlungen gehalten ist. Bei dieser Verstellung der Bandführungen 32 und 33 in ihre Betriebslage wird noch eine weitere Bandführung 55 auf nicht näher dargestellte Weise mit dem Ring 37 aus einer das Magnetband in der Kassette hintergreifenden, in Fig. 1 dargestellten Ruhelage in eine in Fig. 2 dargestellte Betriebslage verstellt, in der sie das Magnetband von der Abtasteinrichtung 15 in Abstand hält. Ferner werden bei der Verstellung der Bandführungen 32 und 33 in ihre Betriebslage zwei je um ein Schwenklager 56 bzw. 57 verschwenkbare Bandführungen 58 und 59 auf nicht näher dargestellte Weise aus einer das Magnetband in der Kassette hintergreifenden, in Fig. 1 dargestellten Ruhelage in eine in Fig. 2 dargestellte Betriebslage verstellt, in der die Bandführung 58 das Magnetband von der Abtasteinrichtung 15 in Abstand hält und die Bandführung 59 das Magnetband um die Antriebswelle 26 herumgeschlungen hält. Zu erwähnen ist noch, dass bei in ihrer Betriebslage befindlicher Bandführung 55 deren Achse in Richtung des Pfeiles 60 gegenüber der Geräteplatte 9 geneigt ist, dass bei in ihrer Betriebslage befindlicher Bandführung 32 deren Achse in Richtung des Pfeiles 61 gegenüber der Geräteplatte 9 geneigt ist und dass bei in ihrer Betriebslage befindlicher Bandführung 33 deren Achse in Richtung des Pfeiles 62 gegenüber der Geräteplatte 9 geneigt ist.

Aufgrund der geneigten Anordnung der Abtasteinrichtung 15 und der Bandführungen 55, 33 und 32 und des Magnetkopfes 24 gegenüber der Geräteplatte 9 ergibt sich der nachfolgend beschriebene Verlauf des von den Bandführungen 32 und 33 um die Abtasteinrichtung 15 herumgeschlunggen gehaltenen Magnetbandes, wobei auf die Fig. 2, 3 und 7 zu verweisen ist. Der vom Bandwickel 4 über die Bandführung 58 bis zur Bandführung 55 sich erstreckende Magnetbandabschnitt weist eine parallel zur Geräteplatte 9 verlaufende Längssymmetrieebene auf. Durch die geneigte Bandführung 55 wird das Magnetband so umgelenkt, dass die Längssymmetrieebene des zwischen der Bandführung 55 und der Bandführung 33 sich erstreckenden Magnetbandabschnittes einen Winkel mit der Geräteplatte 9 einschliesst, wie Fig. 7 zeigt. Durch die geneigte Bandführung 33 wird das Magnetband so umgelenkt, dass die Längssymmetrieebene des von der Bandführung 33 über die Bandführung 32 und den Magnetkopf 24 bis zur Abtasteinrichtung 15 sich erstreckenden Magnetbandabschnittes einen Winkel δ mit der Geräteplatte 9 einschliesst, der kleiner ist als der vorgenannte Winkel δ, wie Fig. 7 zeigt. Um die Abtasteinrichtung 15 verläuft das Magnetband mit seiner Bandmittenlinien in einer schraubenlinienförmigen Bahn 63, wie Fig. 3 zeigt. Diese Bahn 63 ist durch die Neigung der Abtasteinrichtung 15 so gewählt, dass der von der Abtasteinrichtung über eine weitere Bandführung 64, die beiden Magnetköpfe 23 und 22 und die Bandführung 59 bis zum Bandwickel 7 sich erstreckende Magnetbandabschnitt wieder eine parallel zur Geräteplatte 9 verlaufende Längssymmetrieebene aufweist. Die Längssymmetrieebene des von der Bandführung 33 über die Bandführung 32 und den Magnetkopf 24 bis zur Abtasteinrichtung 15 sich erstreckenden Magnetbandabschnittes stimmt hierbei mit jener Ebene überein, die durch die Tangente 65 an die von der Bandmittenlinie beschriebene schraubenlinienförmige Bahn 63 in dem der Bandführung 32 zugewandten Endpunkt 66 des vom Magnetband umschlungenen Winkelbereiches α und dem Radiusvektor 67 von der Achse 20 der Abtasteinrichtung 15 zu diesem Endpunkt 66 gebildet ist. Es sei erwähnt, dass die Längssymmetrieebene eines Magnetbandabschnittes stets durch die Bandmittenlinie hindurchgeht, wobei das Magnetband völlig eben, aber auch in tordierter Form verlaufen kann, wie dies bei Verwendung von konischen Bandführungen auftritt.

Für ein einwandfreies Aufzeichnen und Wiedergeben von Signalen ist es wichtig, dass der vorstehend beschriebene Verlauf des Magnetbandes genau und stets reproduzierbar eingehalten wird. Um dies zu gewährleisten, werden die beiden Bandführungen 32 und 33 in ihrer Betriebslage in ihrer räumlichen Lage genau positioniert. Hierfür weist das Gerät 1 eine Positioniereinrichtung 68 auf, die nachfolgend anhand der Fig. 7, 8, 9 und 10 beschrieben ist. Die Positioniereinrichtung 68 ist auf einer um eine in die Geräteplatte 9 eingesetzte Welle 69 schwenkbaren Trägerplatte 70 angebracht, die unter der Kraft einer an derselben angreifenden Zugfeder 71 steht. Die Welle 69 der Trägerplatte 70 ist gegenüber der Geräteplatte 9 in Richtung des Pfeiles 72 geneigt, wie dies in den Fig. 1 und 2 angegeben ist. Die Neigung der Welle 69 ist hierbei so gewählt, dass die Schwenkbewegung der Trägerplatte 70 um die Welle 69 parallel zu der Längssymmetrieebene des unmittelbar der Abtasteinrichtung 15 benachbarten, frei verlaufenden Magnetbandabschnittes erfolgt, welche Längssymmetrieebene mit der Geräteplatte 9 den Winkel δ einschliesst, wie dies in den Fig. 3 und 7 angegeben ist.

Die Trägerplatte 70 weist einen einseitig offenen, kreisbogenförmigen Positionierschlitz 73 auf, der an seinem abgeschlossenen Ende in einer V-förmigen Positionierkerbe 74 endet, die bei in ihrer Betriebslage befindlichen Bandführungen 32 und 33 mit dem durch den Halter 31 hindurchragenden Ende der Welle 35 für die Bandführungsrolle 34 zusammenwirkt. Von der Trägerplatte 70 kragt in Richtung der Welle 69 ein Steher 75 aus, der an seinem freien Ende einen parallel zur Trägerplatte 70 ausgerichteten Lappen 76 trägt, an dem eine weitere V-förmige Positionierkerbe 77 vorgesehen ist, die mit der Positionierkerbe 74 in Richtung der Welle 69 fluchtend angeordnet ist und die bei in ihrer Betriebslage befindlichen Bandführungen mit dem durch die Bandführungsrolle 34 hindurchgehenden freien Ende der Welle 35 für dieselbe zusammenwirkt, wie dies aus Fig. 7 ersichtlich ist. Die beiden Positionierkerben 74 und 77 bilden einen Teil der Positioniereinrichtung 68 und legen die räumliche Neigungslage der Bandführungen fest, wobei die Welle 35 der Bandführung 32 senkrecht zu der Längssymmetrieebene des unmittelbar der Abtasteinrichtung 15 benachbarten, frei verlaufenden Magnetbandabschnittes steht, welche Längssymmetrieebene mit der Geräteplatte 9 den Winkel δ einschliesst.

An der Trägerplatte 70 ist eine gegenüber derselben zwischen einer in Fig. 8 dargestellten Freigabelage und einer in Fig. 9 dargestellten Andrucklage verstellbare Andruckeinrichtung zum Andrücken der in ihrer Betriebslage befindlichen Bandführungen an die Positioniereinrichtung 68 vorgesehen. Die Andruckeinrichtung ist durch eine beim Verstellen der Bandführungen in ihre Betriebslage von dem Zwischenstück 36 automatisch in ihre Andrucklage und beim Verstellen der Bandführungen aus ihrer Betriebslage von dem Zwischenstück 36 automatisch in ihre Betriebslage steuerbare Totpunkt-Hebelanordnung 78 gebildet. Sie weist einen um eine in die Trägerplatte 70 eingesetzte Welle 79 verschwenkbaren Andruckhebel 80 auf, an dem eine an der Trägerplatte 70 abgestützte Ω-förmige Drahtfeder 81 angreift. Die Drahtfeder 81 hält den Andruckhebel 80 in seiner in Fig. 8 dargestellten Freigabelage gegen einen an der Trägerplatte 70 vorgesehenen Anschlag 82 angelegt. Der Andruckhebel 80 weist an seinem freien Ende eine U-förmige Ausnehmung 83 auf, deren Begrenzungswand abgeschrägt ausgebildet ist.

Beim Verstellen der Bandführungen in ihre Betriebslage mittels der Verstelleinrichtung 30, wobei das durch den Halter 31 hindurchragende Ende der Welle 35 der Bandführungsrolle 34 in den einseitig offenen Positionierschlitz 73 in der Trägerplatte 70 eintritt, dringt das kegelstumpfförmige Zwischenstück 36 auf der Welle 35 in die Ausnehmung 83 im Andruckhebel 80 ein, wodurch beim weiteren Verstellen der Bandführungen mittels der Verstelleinrichtung 30 der Andruckhebel 80 mitverstellt wird. Es wird dabei so weit verschwenkt, dass derselben über seine Totpunktlage verstellt wird, die dann erreicht ist, wenn die Welle 79 und die beiden Angriffspunkte der Drahtfeder 81 auf einer Geraden liegen. Sobald der Andruckhebel 80 seine Totpunktlage überschritten hat, wird er durch die Kraft der Drahtfeder 81 weiter verstellt, wobei er über das Zwischenstück 36 die Bandführung 32 samt dem Halter 31 und der ebenso daran angebrachten Bandführung 33 mitnimmt. Auf diese Weise wird der Andruckhebel 80 von der Drahtfeder 81 in seine in Fig. 9 dargestellte Andrucklage verstellt, in der er sich unter der Kraft der Drahtfeder 81 mit der abgeschrägten Begrenzungswand seiner Ausnehmung 83 am Zwischenstück 36 abstützt, wie Fig. 7 zeigt. Hierdurch werden über die abgeschrägte Begrenzungswand der Ausnehmung 83 auf das Zwischenstück 36 zwei Kraftkomponenten ausgeübt, wovon eine Komponente senkrecht zur Welle 35 und eine Komponente in Richtung der Welle 35 wirksam ist. Durch die senkrecht zur Welle 35 wirksame Komponente wird die Welle mit ihren beiden freien Enden an die Positionierkerben 74 und 77 angedrückt, wodurch die räumliche Neigungslage der Bandführungen genau festgelegt wird. Durch die in Richtung der Welle wirksame Komponente wird die Bandführungsrolle mit ihrem dem Lappen 76 zugewandten Flansch gegen diesen Lappen gedrückt, wodurch die räumliche Höhenlage der Bandführungen genau festgelegt wird. Der Lappen 76 bildet somit auch einen Teil der Positioniereinrichtung 68, der die räumliche Höhenlage der Bandführungen festlegt.

Wie erwähnt, verstellt der Andruckhebel 80, nachdem er seine Totpunktlage überschritten hat, auch den die Bandführungen tragenden Halter 31, wodurch derselbe von der Führungsleiste 40 heruntergezogen wird und die Schubstange 47 in ihre Lage gebracht wird, in der sie die beiden Durchbrüche 45 und 51 frei beweglich durchsetzt, wie dies in Fig. 7 dargestellt ist. Bei dieser Verstellung des Halters 31 tritt zusätzlich zu dem den Halter durchsetzenden Ende der Welle 35 noch ein von dem Halter abstehender Positionierstift 84 in den einseitig offenen Positionierschlitz 73 ein, wodurch auch die Lage des Halters 31 bei in ihrer Betriebslage befindlichen Bandführungen genau festgelegt ist. Auf diese Weise ist daher auch die Lage der zweiten am Halter angebrachten Bandführung 33 räumlich genau festgelegt. Der Positionierschlitz 73 bildet somit auch einen Teil der Positioniereinrichtung 68, der zur Festlegung der Lage des Halters 31 und der zweiten am Halter angebrachten Bandführung 33 vorgesehen ist.

Zum Verstellen der Bandführungen aus ihrer Betriebslage durch Verdrehen des Ringes 37 entgegen der Richtung des Pfeiles 49 wird zuerst die Schubstange 47 mit dem Ring 37, wie bereits vorstehend beschrieben, gekoppelt, wonach der Halter 31 von der Trägerplatte 70 weg gezogen wird. Hierbei wird über das Zwischenstück 36 der Andruckhebel 80 aus seiner Andrucklage verstellt, wobei derselbe nach dem Überschreiten seiner Totpunktlage durch die Kraft der Drahtfeder 81 in seine Freigabelage zurückkehrt und die Verstellung des Halters 31 unterstützt. Der Halter 31 wird dabei wieder auf die Führungsleiste 40 aufgeschoben, wonach der Halter entlang der Führung 39 in seine der Ruhelage der Bandführungen entsprechende Ausgangslage zurückgezogen wird.

Die Trägerplatte 70 weist einen von derselben seitlich abstehenden Arm 85 auf, an dessen freiem Ende das Bremsband 14 der Bandzugregeleinrichtung 12 mit einem seiner Enden befestigt ist, wobei das andere Ende des Bremsbandes 14 feststehend gehalten ist. Die Trägerplatte 70 bildet auf diese Weise den Bandzuggeber der Bandzugregeleinrichtung 12, der unter dem vom Magnetband auf die in ihrer Betriebslage befindlichen, an die Positioniereinrichtung 68 an der Trägerplatte 70 angedrückten Bandführungen ausgeübten Bandzug entgegen der Kraft der an der Trägerplatte angreifenden Zugfeder 71 parallel zu der Längssymmetrieebene des unmittelbar der Abtasteinrichtung 15 benachbarten, frei verlaufenden Magnetbandabschnittes verstellbar angeordnet ist. Bei steigendem Bandzug des Magnetbandes wird die Trägerplatte 70 entgegen der Kraft der Feder 71 verschwenkt. Durch diese Schwenkbewegung wird das mit der Trägerplatte 70 verbundene Ende des Bremsbandes 14 so verstellt, dass das Bremsband entspannt und demzufolge die Bremswirkung des Bremsbandes auf die Bremsscheibe 13 vermindert wird, was eine Verringerung des Bandzuges zur Folge hat. Bei abnehmenden Bandzug des Magnetbandes wird in umgekehrter Weise die Bremswirkung des Bremsbandes auf die Bremsscheibe erhöht, was eine Erhöhung des Bandzuges zur Folge hat. Auf diese Weise sind Schwankungen des Bandzuges beim Antreiben des um die Abtasteinrichtung herumgeschlungenen Magnetbandes in Richtung vom ersten Bandwickel 4 zum zweiten Bandwickel 7 ausregelbar, so dass stets ein praktisch konstanter Bandzug des Magnetbandes erreicht wird. Die Funktionsweise des Bandzuggebers beruht in vorliegendem Fall auf einem rein mechanischen Prinzip.

Die Trägerplatte 70 wird bei aus ihrer Betriebslage verstellten Bandführungen in einer vorgegebenen Lage festgehalten, in der das Bremsband gegenüber der Bremsscheibe 13 gelockert ist und daher keine Bremswirkung auf die Bremsscheibe ausübt, wie dies in Fig. 1 dargestellt ist. Hierdurch ist erreicht, dass das innerhalb der Kassette belassene Magnetband in einem Umspulvorgang zwischen den beiden Bandwickeln 4 und 7 umgespult werden kann, ohne dass das Bremsband eine in diesem Fall störende Bremswirkung auf die Bremsscheibe und damit auf den zu dieser koaxialen Wickeldorn ausübt. Zum Festhalten der Trägerplatte 70 in dieser vorgegebenen Lage weist das Gerät 1, wie aus Fig. 10 ersichtlich ist, einen um eine in die Geräteplatte 9 eingesetzte Welle 86 verschwenkbaren Verriegelungshebel 87 auf, der zwischen einer in Fig. 10 mit punktierten Linien dargestellten Verriegelungslage und einer in Fig. 10 mit strichlierten Linien dargestellten Freigabelage verstellbar ist. An dem Verriegelungshebel 87 greift eine Zugfeder 88 an, die denselben in seiner Verriegelungslage an einem an der Geräteplatte 9 feststehenden Anschlag 89 angelegt hält. Der Verriegelungshebel 87 weist eine U-förmige Ausnehmung 90 auf, in die bei in seiner Verriegelungslage befindlichem Verriegelungshebel ein von der Trägerplatte 70 abstehender Verriegelungsstift 91 ragt, wodurch eine Schwenkbewegung der Trägerplatte 70, die im wesentlichen quer zur Längsrichtung der U-förmigen Ausnehmung verläuft, verhindert ist. Um den Verriegelungshebel 87 in seine Freigabelage zu bringen und darin zu halten, weist der Ring 37 der Verstelleinrichtung 30 einen in radialer Richtung von demselben abstehenden Fortsatz 92 auf, der bei in ihrer Betriebslage befindlichen Bandführungen über einen Arm 93 des Verriegelungshebels 87 diesen in seiner Freigabelage verstellt hält, in der sich der Verriegelungsstift 91 ausserhalb der U-förmigen Ausnehmung 90 im Verriegelungshebel 87 befindet. Beim Verstellen der Bandführungen aus ihrer Betriebslage gibt der vom Ring abstehende Fortsatz 92 den Arm 93 des Verriegelungshebels 87 frei, wobei der Verriegelungshebel 87 unter der Kraft der Zugfeder 88 in seine Verriegelungslage zurückkehrt. Dabei wird der Verriegelungsstift 91 an der Trägerplatte 70 unabhängig von der momentanen Lage der Trägerplatte 70 in die Uförmige Ausnehmung 90 hineingeleitet, was durch eine keilförmige Erweiterung der Ausnehmung 90 erreicht wird.

Bei dem vorstehend beschriebenen Gerät sind die zum Herumschlingen des Magnetbandes um die trommelförmige Abtasteinrichtung vorgesehenen Bandführungen zusätzlich zum Detektieren des Bandzuges des um die Abtasteinrichtung herumgeschlungen gehaltenen Magnetbandes ausgenützt, wobei die Trägerplatte für die Positioniereinrichtung zum Positionieren der Bandführungen zugleich den Bandzuggeber der Bandzugregeleinrichtung bildet, wodurch ein einfacher und kostengünstiger Aufbau erreicht wird. Über die in ihrer Betriebslage in unmittelbarer Nähe der Abtasteinrichtung angeordneten Bandführungen ist vorteilhafterweise der Bandzug im Bereich der Abtasteinrichtung feststellbar, was zu Folge hat, dass die in Abhängigkeit vom Detektionsergebnis des Bandzuggebers den Bandzug regelnde Bandzugregeleinrichtung tatsächlich den Bandzug im Bereich der Abtasteinrichtung regelt, was im Hinblick auf ein einwandfreies Abtasten der Schrägspuren auf dem Magnetband mit der Abtasteinrichtung wichtig ist. Die zur Detektion des Bandzuges ausgenützten Bandführungen sind hierbei in einem relativ grossen Umschlingungsbereich vom Magnetband umschlungen, was im Hinblick auf eine hohe Empfindlichkeit des Bandzuggebers vorteilhaft ist. Da die Verstellung der als Bandzuggeber vorgesehene Trägerplatte bei der Bandzugregelung parallel zur Längssymmetrieebene des unmittelbar der Abtasteinrichtung benachbarten, frei verlaufenden Magnetbandabschnittes erfolgt, ist vorteilhafterweise erreicht, dass trotz der dadurch auftretenden Verstellbewegung der Bandführungen der Verlauf des Magnetbandes in seinem Niveau gegenüber der Abtasteinrichtung unverändert bleibt. Hierbei sorgt der zwischen der Abtasteinrichtung und den zur Bandzugdetektion ausgenützten Bandführungen feststehend angeordnete Magnetkopf, dass unabhängig von den Verstellbewegungen der Bandführungen bei der Bandzugregelung auch der Umschlingungsbereich des Magnetbandes um die Abtasteinrichtung konstant bleibt. Durch die Entkopplung der Verstelleinrichtung von den in ihrer Betriebslage befindlichen, zur Bandzugdetektion ausgenützten Bandführungen ist erreicht, dass mit den Bandführungen auch kleine Bandzugschwankungen unbehindert detektiert werden.

Bei dem in Fig. 11 dargestellten Gerät 1 weist eine zum Herausführen des Magnetbandes 3 aus der hier nicht dargestellten Kassette und zum Herumschlingen desselben um eine trommelförmige Abtasteinrichtung 15 vorgesehene Bandführungseinrichtung 29 nur eine einzige als mit Flanschen versehene Rolle ausgebildete Bandführung 32 auf. Die Bandführung 32 ist auf einem entlang einer Führung 39 verstellbar geführten blockförmigen Halter 31 angebracht, der mittels eines antreibbaren Ringes 37 einer Verstelleinrichtung 30 über eine nicht dargestellte Schubstange verstellbar ist. Zum Positionieren der Bandführung 32 in ihrer Betriebslage, wobei dieselbe von der Verstelleinrichtung 30 entkoppelt ist, ist eine Positioniereinrichtung 68 vorgesehen, die auch zwei in Richtung der Welle 35 der Bandführung 32 fluchtende Positionierkerben 74 und 77 und in vorliegendem Fall eine Anschlagfläche 94 zur Lagepositionierung des von der Verstelleinrichtung 30 entkoppelten Halters 31 aufweist.

Der Träger für die Positioniereinrichtung 68 ist bei diesem Gerät durch einen in zwei geradlinigen Führungen 95 und 96 verschiebbar geführten Schieber 97 gebildet. Der Schieber ist von den Führungen 95 und 96 parallel zu der Längssymmetrieebene des unmittelbar der Abtasteinrichtung benachbarten, frei verlaufenden Magnetbandabschnittes, der sich in vorliegendem Fall frei laufend von der Abtasteinrichtung 15 bis zu der in ihrer Betriebslage befindlichen Bandführung 32 erstreckt, und in Längsrichtung dieses frei verlaufenden Magnetbandabschnittes verstellbar geführt. Hierdurch ist erreicht, dass trotz der Verstellbewegung der Bandführung bei der Bandzugregelung ohne separate Bandführungen der Umschlingungsbereich des Magnetbandes um die Abtasteinrichtung stets unverändert bleibt. Am Schieber 97 greift eine Feder 98 an, die dem auf die in ihrer Betriebslage an die Positioniereinrichtung am Schieber angedrückt gehaltene Bandführung 32 ausgeübten Bandzug entgegenwirkt.

Zum Andrücken der Bandführung 32 an die Positioniereinrichtung 68 ist bei diesem Gerät am Schieber 97 ein schwenkbarer Andruckhebel 99 vorgesehen, der unter der Kraft einer denselben in seine in Fig. 11 dargestellte Andrucklage ziehenden Feder 100 steht. Der Andruckhebel 99 trägt einen von demselben zum Ring 37 der Verstelleinrichtung 30 hin abstehenden Steuerstift 101, der mit einer nicht dargestellten, am Ring 37 vorgesehenen Steuerkulisse zusammenwirkt, die bei in ihrer Betriebslage befindlicher Bandführung 32 den Steuerstift 101 freigibt und beim Verdrehen des Ringes entgegen der Richtung des Pfeiles 49, um die Bandführung aus ihrer dargestellten Betriebslage zu verstellen, den Steuerstift 101 so weit verstellt, dass über diesen der Andruckhebel 99 in seine Freigabelage verschwenkt und von der Steuerkulisse auch darin gehalten wird. Nachdem die Bandführung 32 durch entsprechendes Verdrehen des Ringes entgegen der Richtung des Pfeiles 49 aus ihrer Betriebslage verstellt ist, wird aufgrund der fehlenden Wirkung des Bandzuges der Schieber 97 durch die Kraft der Feder 98 gegen einen Anschlag 102 gezogen.

Der Schieber 97 trägt einen Stab 103 aus permanentmagnetischem oder magnetisierbarem Material, der mit einer nicht dargestellten stromdurchflossenen Spule zusammenwirkt. Bei der Verstellung des Schiebers 97 aufgrund von Bandzugschwankungen ändert sich die Relativlage zwischen dem Stab und der Spule, was Grössenänderungen bei dem durch die Spule fliessenden Strom zur Folge hat. Diese Grössenänderungen werden in an sich bekannter Weise in einer Bandzugregeleinrichtung mit einer elektronischen Regelschaltung für einen Bandwickel-Antriebsmotor zur Regelung des Bandzuges auf einen praktisch konstanten Wert verarbeitet. In vorliegendem Fall beruht somit die Wirkungsweise des durch den Schieber gebildeten Bandzuggebers auf einem elektromagnetischen Prinzip. Wenn sich der Schieber bei aus ihrer Betriebslage verstellter Bandführung an dem Anschlag 102 abstützt, kann über einen hierbei vom Schieber betätigten Schalter die Bandzugregeleinrichtung abgeschaltet werden.

Selbstverständlich ist die Erfindung nicht auf die beiden vorstehend beschriebenen Ausführungsbeispiele beschränkt. Beispielsweise kann die Bandführungseinrichtung auch auf zwei Haltern angebrachte Bandführungen aufweisen, die von der Kassette weg an im wesentlichen gegenüberliegenden Seiten der Abtasteinrichtung in je einer auf einem verstellbaren Träger vorgesehenen Positioniereinrichtung positioniert werden, wobei zumindest einer dieser beiden Träger einen Bandzuggeber bietet. Für die Ausbildung der Bandzuggeber bietet der bekannte Stand der Technik eine Reihe von Möglichkeiten. Selbstverständlich sind auch andere Verstelleinrichtungen anwendbar, etwa solche mit Kniehebelgetrieben, Kettengliedtrieben oder Seiltrieben. Hinsichtlich der als Totpunkt-Hebelanordnung ausgebildeten Andruckeinrichtung sei noch erwähnt, dass diese auch vom Halter für die Bandführungen oder auch vom Ring der Verstelleinrichtung gesteuert werden kann. Selbstverständlich sind auch andere Positioniereinrichtungen für die Bandführungen einsetzbar.

**Patentansprüche**

1. Aufzeichnungs- und/oder Wiedergabegerät (1) für ein Magnetband (3), das in einer in das Gerät einsetzbaren Kassette (2) untergebracht und durch eine Öffnung in der Kassette aus derselben herausführbar ist, mit einer trommelförmigen Abtasteinrichtung (15) für das Magnetband, um deren Mantelfläche das aus der Kassette herausgeführte Magnetband in einem vorgegebenen Winkelbereich herumschlingbar ist, mit einer zum Herausführen des Magnetbandes aus der Kassette und zum Herumschlingen desselben um die Abtasteinrichtung vorgesehenen Bandführungseinrichtung (29), die mindestens eine zwischen einer Ruhelage und einer Betriebslage mittels einer Verstelleinrichtung (30) verstellbare, an einem Halter angebrachte Bandführung (32, 33) aufweist, in deren Ruhelage sie das in der Kassette untergebrachte Magnetband im Bereich von deren Öffnung hintergreift und in deren Betriebslage das von ihr bei ihrer Verstellung mitgenommene Magnetband um die Abtasteinrichtung herumgeschlungen gehalten ist, mit einer auf einem unter der Kraft einer Feder stehenden, verstellbaren Träger (70) vorgesehenen Positioniereinrichtung (68) zum Positionieren der Bandführung in ihrer Betriebslage und mit einer einen Bandzuggeber aufweisenden Bandzugregeleinrichtung (12) zur Regelung des Bandzuges beim Antreiben des um die Abtasteinrichtung herumgeschlungenen Magnetbandes, dadurch gekennzeichnet, daß die Verstelleinrichtung (30) für die Bandführung (32, 33) bei in ihrer Betriebslage befindlicher Bandführung (32, 33) von derselben entkoppelbar ausgebildet ist, daß am Träger (70; 97) eine gegenüber demselben zwischen einer Freigabelage und einer Andrucklage verstellbare Andruckeinrichtung (78; 99) zum Andrücken der in ihrer Betriebslage befindlichen Bandführung (32, 33) an die Positioniereinrichtung (68) vorgesehen ist und daß der Träger (70; 97) den Bandzuggeber der Bandzugregeleinrichtung (72) bildet und unter dem vom Magnetband (3) auf die in ihrer Betriebslage befindliche, an die Positioniereinrichtung (68) am Träger (70; 97) angedrückte Bandführung (32, 33) ausgeübten Bandzug entgegen der Kraft der Feder (71; 98) im wesentlichen parallel zu der Längssymmetrieebene des unmittelbar der Abtasteinrichtung (15) benachbarten, frei verlaufenden Magnetbandabschnittes verstellbar angeordnet ist.

2. Gerät nach Anspruch 1, dadurch gekennzeichnet, daß die Verstelleinrichtung (30) für die Bandführung (32, 33) einen auf einer Geräteplatte (9) um die Abtasteinrichtung (15) verdrehbaren, antreibbaren Ring (37) zum Verstellen des Halters (31) für die Bandführung (32, 33) und eine zum Ring (37) koaxiale Führung (39) zum Führen des Halters (31) bei seiner Verstellung aufweist, daß der Ring (37) mit einem Durchbruch (45) zur Geräteplatte (9) hin versehen und mit dem Halter (31) eine Schubstange (47) gelenkig verbunden ist deren abgewinkeltes freies Ende (48) beim Verdrehen des Ringes (37) zum Verstellen der Bandführung (32, 33) in ihre Betriebslage im Durchbruch (45) am Ring (37) anliegt und sich an der Geräteplatte (9) gleitend abstützt und beim Verdrehen des Ringes (37) zum Verstellen der Bandführung (32, 33) aus ihrer Betriebslage von der Geräteplatte (9) abgehoben ist und an einem Anschlag (53, 54) am Ring (37) anliegt, und daß die Geräteplatte (9) einen bei in ihrer Betriebslage befindlicher Bandführung (32, 33) sich mit dem Durchbruch im Ring (37) zumindest teilweise überdeckenden weiteren Durchbruch (51) aufweist, wobei zur Entkopplung der Verstelleinrichtung (30) von der in ihrer Betriebslage befindlichen, an die Positioniereinrichtung (68) am Träger (70) angedrückten Bandführung (32, 33) der Halter (31) von der Führung (39) gelöst wird und die Schubstange (47) in die beiden Durchbrüche (45, 51) frei beweglich eintritt und zum Koppeln der Verstelleinrichtung (30) mit der Bandführung (32, 33) beim Verstellen derselben aus ihrer Betriebslage die Schubstange (47) von Ring (37) mit ihrem abgewinkelten freien Ende (48) am Anschlag (53, 54) zur Anlage gebracht und der Halter (31) mit der Führung (39) verbunden wird (Fig. 4, 5, 6, 7, 8, 9).

3. Gerät nach einem der vorhergehenden Ansprüche, dadurch gekennzeichnet, daß die Andruckeinrichtung (78) durch eine beim Verstellen der Bandführung (32, 33) in ihre Betriebslage automatisch in ihre Andrucklage und beim Verstellen der Bandführung (32, 33) aus ihrer Betriebslage automatisch in ihre Freigabelage steuerbare Totpunkt-Hebelanordnung gebildet ist (Fig. 7, 8, 9).

4. Gerät nach einem der vorhergehenden Ansprüche, dadurch gekennzeichnet, daß der unmittelbar der Abtasteinrichtung (15) benachbarte, frei verlaufende Magnetbandabschnitt sich bis zu der in ihrer Betriebslage befindlichen, an die Positioniereinrichtung (68) am Träger (97) angedrückten Bandführung (32) erstreckt und daß der Träger (97) durch einen in Längsrichtung dieses frei verlaufenden Magnetbandabschnittes verstellbar angeordneten Schieber gebildet ist (Fig. 11).

## Revendications

1. Appareil d'enregistrement et/ou de reproduction (1) pour une bande magnétique (3), qui est logée dans une cassette (2) pouvant être introduite dans l'appareil et peut être extraite de cette cassette par une ouverture de celle-ci, comprenant un dispositif de balayage en forme de tambour (15) pour la bande magnétique, autour de la surface périphérique duquel la bande magnétique extraite de la cassette peut être bouclée dans un domaine angulaire prédéfini; un dispositif de guidage de bande (29) servant à extraire la bande magnétique de la cassette et à la boucler autour du dispositif de balayage, comportant au moins un guide de bande (32, 33) monté sur un support et déplaçable au moyen d'un dispositif de déplacement (30) entre une position de repos et une position de travail, qui, dans sa position de repos, il est engagé derrière la bande magnétique logée dans la cassette dans la zone de l'ouverture de celle-ci et, dans sa position de travail, permet que la bande magnétique, qu'il a entraînée lors de son déplacement, soit maintenue bouclée autour du dispositif de balayage; un dispositif positionneur (68), prévu sur un support déplaçable (70) maintenu sous la sollicitation d'un ressort pour positionner le guide de bande dans sa position de travail, et un dispositif de régulation de tension de bande (12) comportant un capteur de tension de bande pour régler la tension de bande lors de l'entraînement de la bande magnétique bouclée autour du dispositif de balayage, caractérisé en ce que le dispositif de déplacement (30) pour le guide de bande (32, 33) peut être désaccouplé du guide de bande (32, 33) lorsque celui-ci se trouve dans sa position de travail, que le support (70, 97) comporte un dispositif presseur (78, 99) déplaçable par rapport au support entre une position de libération et une position de pression pour presser le guide de bande (32, 33) se trouvant dans sa position de travail contre le dispositif positionneur (68) et que le support (70, 97) forme le capteur de tension de bande du dispositif de régulation de tension de bande (12) et est monté déplaçable en substance parallèlement au plan de symétrie longitudinal de la section de bande magnétique libre directement voisine du dispositif de balayage (15) sous l'effet de la tension de bande exercée à l'encontre de la sollicitation du ressort (71, 98) par la bande magnétique (3) sur le guide de bande (32, 33) se trouvant dans sa position de travail pressé contre le dispositif positionneur (68) sur le support (70, 97).

2. Appareil suivant la revendication 1, caractérisé en ce que le dispositif de déplacement (30) pour le guide de bande (32, 33) comporte une couronne (37) entraînable, pouvant tourner sur une platine (9) autour du dispositif de balayage (15) pour déplacer le support (31) pour le guide de bande (32, 33) et un guide (39) coaxial à la couronne (37) pour guider le support (31) lors de son déplacement, que la couronne (37) est pourvue d'une ouverture (45) en direction de la platine (9) et qu'au support (31) est articulée une biellette (47), dont l'extrémité libre coudée (48) s'applique dans l'ouverture (45) contre la couronne (37) et porte à glissement contre la platine (9) lors de la rotation de la couronne (37) en vue du déplacement du guide de bande (32, 33) dans sa position de travail et est écartée de la platine (9) et s'applique contre une butée (53, 54) sur la couronne (37) lors de la rotation de la couronne (37) en vue du déplacement du guide de bande (32, 33) hors de sa position de travail, et que la platine (9) comporte une autre ouverture (51) qui, lorsque le guide de bande (32, 33) se trouve dans sa position de travail, chevauche au moins partiellement l'ouverture dans la couronne (37), de sorte que pour le désaccouplement du dispositif de déplacement (30) du guide de bande (32, 33) en position de travail, qui est pressé contre le dispositif positionneur (68) sur le support (70), le support (31) est libéré du guide (39) et la biellette (47) pénètre d'une manière librement mobile dans les deux ouvertures (45, 51) et que pour l'accouplement du dispositif de déplacement (30) avec le guide de bande (32, 33) lors du déplacement de celui-ci hors de sa position de travail, la biellette (47) est amenée, à partir de la couronne (37), par son extrémité libre coudée (48), en contact avec la butée (53, 54) et le support (31) est relié au guide (39) (Fig. 4, 5, 6, 7, 8, 9).

3. Appareil suivant l'une quelconque des revendications précédentes, caractérisé en ce que le dispositif presseur (78) est formé par un dispositif à levier à point mort qui est amené automatiquement dans sa position de pression lors du déplacement du guide de bande (32, 33) dans sa position de travail et dans sa position de libération, lors du déplacement du guide de bande (32, 33) hors de sa position de travail (Fig. 7, 8, 9).

4. Appareil suivant l'une quelconque des revendications précédentes, caractérisé en ce que la section de bande magnétique libre directement voisine du dispositif de balayage (15) s'étend jusqu'au guide de bande (32) se trouvant dans sa position de travail, qui est pressé contre le dispositif positionneur (68) sur le support (97) et que le support (97) est formé par un coulisseau monté mobile dans le sens longitudinal de cette section de bande magnétique libre (Fig. 11).

**Claims**

1. A recording and/or reproducing apparatus (1) for a magnetic tape (3) which is accommodated in a cassette (2) that can be introduced into the apparatus and can be drawn out of the cassette through an opening therein, comprising a drum-shaped scanning device (15) for the magnetic tape, around the outer surface of which the magnetic tape drawn out of the cassette can be wrapped in a given angular range, a tape guide device (29) which is adapted to draw the magnetic tape out of the cassette and to wrap it around the scanning device and which has at least one tape guide (32, 33) which can be displaced between a rest position and an operating position by means of a displacement device (30), is secured to a holder and in whose rest position it engages behind the magnetic tape accommodated in the cassette at the area of its opening and in whose operating position the magnetic tape taken along by it during its displacement is kept wrapped around the scanning device, a positioning device (68) for positioning the tape guide in its operating position, which is arranged on a displaceable support (70) subjected to the force of a spring, and a tape tension adjustment device (12) which comprises a tape tension indicator and serves to adjust the tape tension when the magnetic tape wrapped around the scanning device is driven, characterized in that the displacement device (30) for the tape guide (32, 33) when the tape guide (32, 33) is in its operating position, is constructed so that it can be disengaged therefrom, in that an urging device (78; 99) for urging the tape guide (32, 33), which is in its operating position, against the positioning device (68), is provided on the support (70; 97) so as to be displaceable with respect to this support between a disengaged position and an urged position, and in that the support (70; 97) constitutes the tape tension indicator of the tape tension adjustment device (12) and is arranged so as to be displaceable substantially parallel to the longitudinal plane of symmetry of the freely extending magnetic tape section immediately adjacent the scanning device (15) under the tape tension exerted by the magnetic tape (3) on the tape guide (32, 33) situated in its operating position and urged against the positioning device (68) on the support (70; 97) against the force of the spring (71; 98).

2. An apparatus as claimed in Claim 1, characterized in that the displacement device (30) for the tape guide (32, 33) has a ring (37) for displacing the holder (31) for the tape guide (32, 33) which is adapted to be rotated on an instrument panel (9) about the scanning device (15) and to be driven and a guide (39) coaxial to the ring (37) for guiding the holder (31) during its displacement, the ring (37) is provided with a perforation (45) to the instrument panel (9) and a sliding rod (47) is pivotably connected to the holder (31), the angular free end (48) of this rod engaging the ring (37) in the perforation (45) upon rotation of the ring (37) for displacing the tape guide (32, 33) to its operating position and being slidably supported by the instrument panel (9) and upon rotation of the ring (37) for displacing the tape guide (32, 33) from its operating position being lifted off the instrument panel (9) and engaging an abutment (53, 54) at the ring (37), while the instrument panel (9) has a further perforation (51) which, when the tape guide (32, 33) is in its operating position, at least partly overlaps the perforation in the ring (37), wherein the holder (31) is detached from the guide (39) for disengaging the displacement device (30) from the tape guide (32, 33), which is in its operating position and is urged against the positioning device (68) on the support (70), the sliding rod (47) is introduced into the two perforations (45, 51) so as to be freely movable, the sliding rod (47) is brought by the ring (37) into engagement with an angular free end (48) at the abutment (53, 54) for coupling the displacement device (30) with the tape guide (32, 33) upon displacement of the latter from its operating position and the holder (31) is connected with the guide (39) (Figures 4, 5, 6, 7, 8, 9).

3. An apparatus as claimed in any one of the preceding Claims, characterized in that the urging device (78) is constituted by a dead centre lever arrangement which can be automatically adjusted to its urged position upon displacement of the tape guide (32, 33) to its operating position and can be automatically adjusted to its disengaged position upon displacement of the tape guide (32, 33) from its operating position (Figures 7, 8, 9).

4. An apparatus as claimed in any one of the preceding Claims, characterized in that the freely extending magnetic tape section immediately adjacent the scanning device (15) extends to the tape guide (32) situated in its operating position and urged against the positioning device (68) on the support (97) and the support (97) is constituted by a slide arranged so as to be displaceable in the longitudinal direction of this freely extending magnetic tape section (Fig. 11).

Fig.1

**Fig.2**

**Fig.3**

Fig.4

Fig.6

Fig.5

Fig.7

EP 0 162 497 B1

Fig.8

Fig.9

4

Fig.10

Fig.11